# EUROPÄISCHE PATENTSCHRIFT

(11) **EP 2 853 849 B1**
(45) Veröffentlichungstag und Bekanntmachung des Hinweises auf die Patenterteilung: **20.12.2017**
(21) Anmeldenummer: 14003319.2
(22) Anmeldetag: 25.09.2014
(51) Int. Cl.: F26B 21/08, F26B 25/06, F26B 25/10, F26B 25/12, H01M 10/058

(54) **Trockenraum, insbesondere für den Einsatz bei der Lithium-Ionen-Zellfertigung**
Dry room, especially for use in the production of lithium-ion cells
Chambre sèche, en particulier pour l'utilisation lors de la fabrication de batteries au lithium-ion

(30) Priorität: 27.09.2013 DE 102013016559
(43) Veröffentlichungstag der Anmeldung: 01.04.2015
(73) Patentinhaber: M+W Germany GmbH, 70499 Stuttgart (DE)
(72) Erfinder: Simon, Rudolf, 70825 Korntal-Münchingen (DE)
(74) Vertreter: Kohl, Karl-Heinz

(56) Entgegenhaltungen:
- WO-A1-2014/079725
- DE-A1-102010 043 522
- US-A- 5 487 768

## Beschreibung

Die Erfindung betrifft einen Trockenraum, insbesondere für den Einsatz bei der Lithium-Ionen-Zellfertigung, nach dem Oberbegriff des Anspruches 1.

Einige wichtige Prozessschritte bei der Lithium-Ionen-Zellfertigung und auch anderer industrieller Produktionen erfordern extrem trockene Umgebungen mit Taupunkten zwischen etwa -30° C und etwa -80° C, was einer relativen Feuchte von weit unter 1 % entspricht. Solche Prozesse werden in Trockenräumen ausgeführt. Für eine gleichbleibende Trockenheit sorgt ein kontinuierlicher Luftstrom aus mit Adsorptionsrädern bestückten industriellen Entfeuchtungsanlagen. Ihre Auslegung erfolgt mittels der maximal pro Stunde abzuführenden Feuchtigkeitsmenge. Ein höherer Feuchteeintrag in den Trockenraum erfordert sowohl größere und damit in der Anschaffung teurere Anlagen als auch die Abführung größerer Energiemengen und damit höherer Unterhaltskosten. Bei der Lithium-Ionen-Zellfertigung befinden sich im Trockenraum handelsübliche Prozessmaschinen, die im Trockenraum frei aufgestellt und von Werkern innerhalb des Trockenraumes bedient werden. Dadurch ist es möglich, auf Neuentwicklungen in Prozess, Materialien und Maschinen schnell und flexibel zu reagieren. Durch die sehr große, mit hochtrockner Luft gespülte Fläche und durch die von den Werkern abgegebene und aus der zirkulierenden Trockenluft zu entfernende Körperfeuchtigkeit ergibt sich aber ein hohes Prozessrisiko bzw. hohe Investitions- und Betriebskosten, um die geforderten Umgebungsbedingungen zu garantieren.

Es ist ein Trockenraum für die Herstellung von Lithium-Ionen-Zellen bekannt (WO 2014/079725 A1), der sich in einer Einhausung befindet, die vorzugsweise als Glovebox ausgebildet ist und für Forschungszwecke im Laborbereich eingesetzt wird. Die Einhausung steht mit zumindest einer Schleuse in Wirkverbindung, über die Ablagetabletts in die Glovebox eingeschleust und im Ablagebereich an Ablagepositionen fixiert werden. Der Trockenraum kann nicht von einer Bedienperson betreten werden.

Auch der aus der DE 10 2010 043 522 A1 bekannte Trockenraum, der in einer Reinraumkabine vorgesehen ist, kann nicht von einer Bedienperson betreten werden. In der Reinraumkabine befinden sich keine Prozessmaschinen, sondern sie dient zum Trocknen von Werkstücken.

Der Erfindung liegt die Aufgabe zugrunde, den gattungsgemäßen Trockenraum so auszubilden, dass er bei sehr geringen Investitions- und Betriebskosten ohne Beeinträchtigung der Funktionalität sehr stabile Umgebungsbedingungen gewährleistet.

Diese Aufgabe wird beim gattungsgemäßen Trockenraum erfindungsgemäß mit den kennzeichnenden Merkmalen des Anspruches 1 gelöst.

Der erfindungsgemäße Trockenraum ist so ausgebildet, dass die Bedienung der Prozessmaschine nicht mehr von Bedienpersonen innerhalb des Trockenraumes erfolgt, sondern von einem Bereich außerhalb des Trockenraumes. Die Bedienperson muss somit zur Bedienung der Prozessmaschine den Trockenraum nicht betreten. Dadurch wird der Feuchteeintrag in die Trockenluft sehr gering gehalten, so dass nur wenig Feuchtigkeit der Trockenluft entzogen werden muss. Dadurch können die Energiemengen zur Entfeuchtung gering gehalten werden, was unmittelbar zu sehr geringen Unterhaltskosten des Trockenraumes führt. Die erfindungsgemäße Ausbildung hat ferner den Vorteil, dass gesundheitliche Einwirkungen auf das Bedienpersonal infolge der extrem trockenen Luft vermieden werden. Über die Schleuse kann eine Bedienperson beispielsweise für Wartungsarbeiten, für das Einbringen oder Herausbringen von Teilen in bzw. aus dem Trockenraum den Trockenraum ohne möglichst großen Feuchteeintrag betreten. Die Schleuse ist so ausgebildet, dass die Bedienperson, die den Trockenraum betreten soll, in der Schleuse so behandelt wird, dass Schmutzteilchen und Feuchtigkeit von der Bedienperson entfernt werden. Längs der wenigstens einen Seitenwand sind im Trockenraum mehrere Prozessmaschinen angeordnet.

Vorteilhaft ist das mit der Trockenluft beaufschlagbare Volumen des Trockenraumes im Hinblick auf die Investitions- und Betriebskosten minimiert. Da die Prozessmaschine von einem Bereich außerhalb des Trockenraumes durch die Bedienperson betätigt werden kann, kann der Trockenraum klein gehalten und muss nur von wenig Personal betreten werden, so dass auch ein entsprechend kleinerer Feuchteeintrag auftritt. Aufgrund der kleineren Entfeuchtungsmenge sind kleinere und damit kostengünstigere Entfeuchtungsanlagen ausreichend.

Bei einer vorteilhaften Ausführungsform ist die Prozessmaschine unmittelbar an einer der Seitenwände des Trockenraumes angeordnet. Dadurch sind die Leitungen von einem Bedienelement, das sich außerhalb des Trockenraumes befindet, zur Prozessmaschine entsprechend kurz, so dass eine zuverlässige Signalübertragung vom Bedienelement an die Prozessmaschine möglich ist. Wenn die Prozessmaschine unmittelbar an der Seitenwand angeordnet ist, kann der Trockenraum insgesamt klein ausgebildet sein. Insbesondere entfällt der bei den bekannten Trockenräumen erforderliche Platzbedarf für die Bedienpersonen, die sonst üblicherweise die Prozessmaschine innerhalb des Trockenraumes zu bedienen haben.

Um den Betrieb der Prozessmaschine einfach überwachen zu können, ist die entsprechende Seitenwand des Trockenraumes in Höhe dieser Prozessmaschine mit wenigstens einem Fenster versehen.

Damit über das Fenster keine Feuchtigkeit in den Trockenraum gelangt, ist es vorteilhaft wasserdampfdiffusionsdicht ausgebildet. Auch die Seitenwände des Trockenraumes sind vorteilhaft wasserdampfdiffusionsdicht gestaltet, so dass auch bei längerem Betrieb des Trockenraumes keine Feuchtigkeit von außen eindringen kann. Auch die Dichtungen zwischen dem Fenster und dem Öffnungsrand der entsprechenden Seitenwand sind vorteilhaft wasserdampfdiffusionsdicht ausgebildet.

Ist bei einer Prozessmaschine eine manuelle Betätigung erforderlich, dann ist in der entsprechenden Seitenwand vorteilhaft wenigstens eine Manipulationseinrichtung für die manuelle Bedienung der Prozessmaschine vorgesehen. Eine solche Manipulationseinrichtung ist vorzugsweise ein Handschuh. Die Manipulationseinrichtung ist wasserdampfdiffusionsdicht ausgebildet, so dass über sie kein Feuchteeintrag in den Trockenraum möglich ist.

Um den Energiebedarf gering zu halten, wird die Trockenluft vorteilhaft im Kreislauf geführt. Sie wird aus dem Trockenraum abgesaugt und der Entfeuchtungsanlage zugeführt. Hier wird die in der Trockenluft enthaltene Feuchtigkeit entfernt. Die Trockenluft wird dann wieder zurück in den Trockenraum geführt.

Der Trockenraum ist vorteilhaft mit wenigstens einer Absaugöffnung für die Trockenluft versehen.

Um auch hochempfindliche Materialien im Trockenraum behandeln zu können, hat die Trockenluft vorteilhaft einen Taupunkt zwischen etwa -30° C und etwa -80° C. Bei diesen Taupunkten hat die Trockenluft nur noch eine extrem geringe Feuchtigkeit, die weit unter 1 % relativer Feuchte liegt.

Vorteilhaft wird die Trockenluft vor ihrem Eintritt in den Trockenraum gefiltert, so dass auch im Hinblick auf Schmutzteilchen extrem saubere Trockenluft in den Trockenraum eintritt.

Bei einer bevorzugten Ausführungsform sind die Prozessmaschinen vorteilhaft in einer Reihe hintereinander längs der Seitenwand vorgesehen. Je nach Ausbildung der Prozessmaschine können in deren Bereich Manipulationseinrichtungen vorgesehen sein, wenn die entsprechende Prozessmaschine manuell zu bedienen ist. Sofern ein manueller Eingriff nicht erforderlich ist, weist die Seitenwand im Bereich dieser Prozessmaschine vorteilhaft ein Fenster auf, über das der ordnungsgemäße Betrieb der Prozessmaschine überwacht werden kann.

Da die Bedienung der Prozessmaschine von einem Bereich außerhalb des Trockenraumes erfolgt, können die Prozessmaschinen unmittelbar benachbart neben der Seitenwand des Trockenraumes angeordnet sein, was sich vorteilhaft auf die Größe des Trockenraumes und damit auf die Menge der umzuwälzenden Trockenluft auswirkt.

Besonders vorteilhaft ist es, wenn längs zweier einander gegenüberliegender Seitenwände jeweils mehrere Prozessmaschinen angeordnet sind. Diese Prozessmaschinen können an den beiden Seitenwänden vorteilhaft jeweils in Reihe hintereinander angeordnet sein.

Vorteilhaft ist zwischen den beiden Prozessmaschinenreihen wenigstens ein Lager für Rohmaterialien im Trockenraum angeordnet. Dadurch können die Prozessmaschinen innerhalb der Prozessmaschinenreihen auf beiden Seiten des Lagers einfach mit den erforderlichen Rohmaterialien versorgt werden.

Vorteilhaft ist es, die Absaugöffnung für die Trockenluft im Bereich zwischen den einander gegenüberliegenden Seitenwänden und damit zwischen den einander gegenüberliegenden Prozessmaschinenreihen anzuordnen. Durch diese Anordnung der Absaugöffnung ergibt sich eine einwandfreie Absaugung der Trockenluft aus dem Trockenraum.

Um eine optimale Beaufschlagung der Prozessmaschinen im Trockenraum zu gewährleisten, wird die Trockenluftzufuhr vorteilhaft geregelt. Diese Luftstromregelung kann intelligent durchgeführt werden, beispielsweise indem in besonders kritischen Bereichen innerhalb des Trockenraumes mehr Trockenluft zugeführt wird als in weniger kritischen Bereichen.
Bevorzugt sind nicht nur die Seitenwände, sondern auch der Boden und die Decke des Trockenraumes wasserdampfdiffusionsdicht ausgebildet.
Der Boden des Trockenraumes ist im Hinblick auf die sehr trockene Trockenluft vorteilhaft antistatisch ausgebildet.
Eine zusätzliche Sicherheit gegen Feuchteeintrag von der Umgebung ist gegeben, wenn im Trockenraum ein geringer Überdruck eingestellt wird.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale.

Weitere Merkmale der Erfindung ergeben sich aus den weiteren Ansprüchen. Die Erfindung wird anhand eines in den Zeichnungen dargestellten Ausführungsbeispieles näher erläutert. Es zeigen
- Fig. 1: in perspektivischer Darstellung einen erfindungsgemäßen Trockenraum,
- Fig. 2: eine Draufsicht auf den Trockenraum, in dem die Prozessmaschinen eine andere Aufstellung als im Trockenraum gemäß Fig. 1 haben,
- Fig. 3: einen Schnitt längs der Linie III-III in Fig. 2.
Der im Folgenden beschriebene Trockenraum wird beispielhaft bei der Herstellung von Lithium-Ionen-Zellen eingesetzt. Der Trockenraum kann selbstverständlich überall dort verwendet werden, wo es auf sehr trockene Umgebungen ankommt.
Der Trockenraum hat vorzugsweise rechteckigen Umriss mit vier rechtwinklig aneinander anschließenden Seitenwänden 1 bis 4. Der Umriss des Trockenraumes ist auf die Rechteckform nicht beschränkt; er hängt u.a. von den im Trockenraum befindlichen Prozessmaschinen und dergleichen ab. Der Trockenraum wird von einem Boden 5 und einer Decke 6 begrenzt.

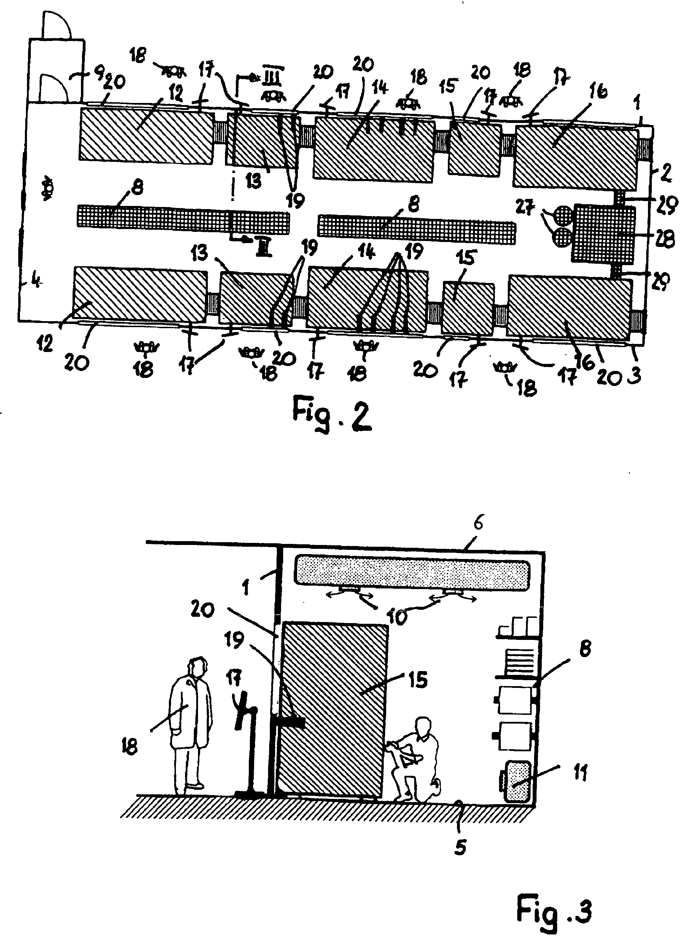

Im Trockenraum befinden sich zwei Prozesslinien, die durch wenigstens ein Lager 8, im Ausführungsbeispiel durch zwei Lager, voneinander getrennt sind. Wie aus Fig. 3 hervorgeht, kann das Lager 8 aus mehreren Etagen bestehen, in denen sich die für die Fertigung notwendigen Teile befinden. Da die beiden Lager 8 im Ausführungsbeispiel zwischen den beiden Prozesslinien angeordnet sind, sind die im Lager 8 angeordneten Teile von beiden Prozesslinien aus leicht und innerhalb kurzer Zeit zugänglich.

In der Seitenwand 1 ist wenigstens eine Schleuse 9 vorgesehen, über die der Trockenraum verlassen bzw. betreten werden kann. Die Schleuse 9 ist in bekannter Weise so ausgebildet, dass beim Betreten bzw. Verlassen keine Feuchtigkeit in den Trockenraum gelangt.

Zur Erzielung einer gleichbleibenden Trockenheit im Trockenraum durchströmt ein Luftstrom 10 (Fig. 3) den Trockenraum kontinuierlich. Im Ausführungsbeispiel wird diese trockene Luft vom Deckenbereich aus zugeführt. Die Luft 10 durchströmt den Trockenraum und tritt über wenigstens eine Absaugöffnung 11 aus dem Trockenraum aus (Fig. 3). Im Ausführungsbeispiel befindet sich die Absaugöffnung in Höhe der Lager 8, kann aber auch an jeder geeigneten Stelle innerhalb des Trockenraumes vorgesehen sein. Die durch die Absaugöffnungen 11 strömende Trockenluft wird einer (nicht dargestellten) Entfeuchtungsanlage zugeführt, die sich außerhalb des Trockenraums befindet und in der die in der Trockenluft befindliche Feuchtigkeit entfernt wird. Die Trockenluft wird dann in den Trockenraum zurückgeführt. Da die Trockenluft auf diese Weise im Kreislauf geführt wird, wird der Energieverbrauch gering gehalten, da die Trockenluft innerhalb des Trockenraums nur eine geringe Menge an Feuchtigkeit aufnimmt, so dass dementsprechend auch nur eine geringe Menge an Feuchtigkeit der Trockenluft in der Entfeuchtungsanlage entnommen werden muss.

Im Trockenraum sind Prozessmaschinen 12 bis 16 angeordnet, die beispielhaft in einer Linie hintereinander angeordnet sind. Die Prozessmaschinen können aber auch je nach Anlagegestaltung unterschiedlich innerhalb des Trockenraumes angeordnet sein. Im Ausführungsbeispiel sind zwei Reihen gleichartiger Prozessmaschinen längs der einander gegenüberliegenden Seitenwände 1, 3 angeordnet. Für die Prozessmaschinen erforderliche Bedienelemente 17, wie Monitore, Tastaturen und dergleichen, sind außerhalb des Trockenraumes angeordnet. Die entsprechenden Leitungen zwischen den Bedienelementen 17 und den zugehörigen Prozessmaschinen 12 bis 16 sind so abgedichtet durch die entsprechenden Wände des Trockenraumes geführt, dass über diese Durchführungen keine Feuchtigkeit von außen in den Trockenraum gelangen kann.

Diejenigen Prozessmaschinen 13, 14, die manuelle Eingriffe durch Bedienpersonal 18 erfordern, sind mit Manipulationseinrichtungen 19 versehen, die vorteilhaft Handschuhe sind, mittels denen von außen ein Zugriff in den Behandlungsraum der jeweiligen Prozessmaschinen möglich ist.

Beim Ausführungsbeispiel sind sämtliche Prozessmaschinen 12 bis 16 so im Trockenraum angeordnet, dass sie unmittelbar benachbart zu den Seitenwänden 1, 3 liegen. Die Prozessmaschinen 13, 14 lassen sich von dem entsprechenden Bedienpersonal 18 von außen bedienen. Die Handschuhe 19 sind von der Außenseite der Seitenwände 1, 3 aus zugänglich (Fig. 3), so dass die außerhalb des Trockenraumes stehende Bedienperson 18 die erforderlichen Manipulationen an der Prozessmaschine 13, 14 ausführen kann.

Die Seitenwände 1, 3 sind im Bereich derjenigen Prozessmaschinen 12 bis 16, an denen dies erforderlich ist, jeweils mit einem Fenster 20 versehen, über die eine einfache Kontrolle während des Arbeitsprozesses von außen möglich ist. Die Fenster 20 bestehen aus wasserdampfdiffusionsdichtem Material, wie Glas, entsprechende Kunststoffe und dergleichen. Die Fenster 20 sind in den Seitenwänden 1, 3 so abgedichtet, dass keine Feuchtigkeit von außen in den Trockenraum gelangen kann. Sofern eine Kontrolle der Prozessmaschine nicht erforderlich ist, sind im Bereich dieser Prozessmaschine keine Fenster 20 in den Seitenwänden des Trockenraumes erforderlich. Sind darüber hinaus an den Prozessmaschinen keine manuellen Eingriffe erforderlich, können solche Prozessmaschinen auch größeren Abstand von der entsprechenden Seitenwand des Trockenraumes haben.

Vorteilhaft ist es allerdings, wenn die Prozessmaschinen mit nur geringem Abstand zu den Seitenwänden angeordnet sind, wie dies beim dargestellten Ausführungsbeispiel der Fall ist. Dann kann der Trockenraum bei einer vorgegebenen Zahl von Prozessmaschinen klein gehalten werden, so dass auch der erforderliche Bedarf an Trockenluft entsprechend gering ist. Dies wiederum hat den Vorteil, dass nur wenig Trockenluft im Kreislauf gehalten werden muss und die Entfeuchtungsanlage entsprechend kostengünstiger und energiesparender arbeiten kann.

Für den Trockenraum ist, insbesondere für die Lithium-Ionen-Zellfertigung, eine extrem trockene Umgebung notwendig, wobei die Taupunkte zwischen etwa -30° C und etwa -80° C liegen, was einer relativen Feuchte von weit unter 1 % entspricht. Die Trockenluft kann nicht nur, wie im dargestellten Ausführungsbeispiel, den Trockenraum vertikal durchströmen, sondern beispielsweise auch horizontal. Die Zuführung der Trockenluft muss auch nicht vom Deckenbereich des Trockenraumes erfolgen, obwohl dies vorteilhaft ist, weil dann die Trockenluft zuverlässig so geführt werden kann, dass keine Toträume entstehen, in denen keine Trockenluft strömt. Die Entfeuchtungsanlage ist mit Adsorptionsrädern versehen, mit denen die Trockenluft zuverlässig entfeuchtet werden kann.

Die zugeführte Trockenluft kann vor ihrem Eintritt in den Trockenraum gefiltert werden, vorzugsweise mit Hilfe von HEPA-Filtern. Die Absaugöffnung(en) 11 befindet sich bei der dargestellten Ausführungsform vorteilhaft in der Mitte des Trockenraums, wodurch eine gleichmäßige und zuverlässige Absaugung der Trockenluft aus dem Trockenraum gewährleistet ist. Die Absaugung der Trockenluft erfolgt durch wenigstens einen Ventilator, der Bestandteil der Entfeuchtungsanlage ist.

Die Seitenwände 1 bis 4 des Trockenraumes sind wasserdampfdiffusionsdicht ausgebildet, was beispielsweise durch eine Metallkaschierung der Seitenwände erreicht werden kann. Auch der Boden 5 und die Decke 6 sind entsprechend wasserdampfdiffusionsdicht ausgebildet.

Der Boden 5 kann mit einem Epoxidharz beschichtet sein, der vorteilhaft antistatisch ausgebildet ist, was insbesondere bei der hohen Trockenheit der Trockenluft von Vorteil ist. Zu diesem Zweck kann das Epoxidharz mit Graphitteilchen versehen sein. Es ist weiter möglich, den Boden mit einer Wasserdampfsperre zu versehen.

Da die Prozessmaschinen 12 bis 16 so im Trockenraum angeordnet sind, dass sie von außerhalb des Trockenraumes bedient werden können, ist innerhalb des Trockenraumes kein Bedienpersonal mehr notwendig, das zu einer Erhöhung der Feuchtigkeit im Trockenraum und damit zu höheren Betriebskosten führen würde. Wenn die Prozessmaschinen vollautomatisch arbeiten, dann ist im Trockenraum kein Bedienpersonal erforderlich. Wenn allerdings die Materiallogistik im Trockenraum nicht vollständig automatisierbar ist, sind ein oder zwei Bedienpersonen im Trockenraum erforderlich. Die Feuchtelast, die durch diese geringe Zahl von Bedienpersonen erzeugt wird, ist verhältnismäßig gering. Infolge dieser geringen Feuchtebelastung lässt sich die Trockenluft bei ihrem Kreislauf in der Entfeuchtungsanlage kosten- und energiesparend entfernen.

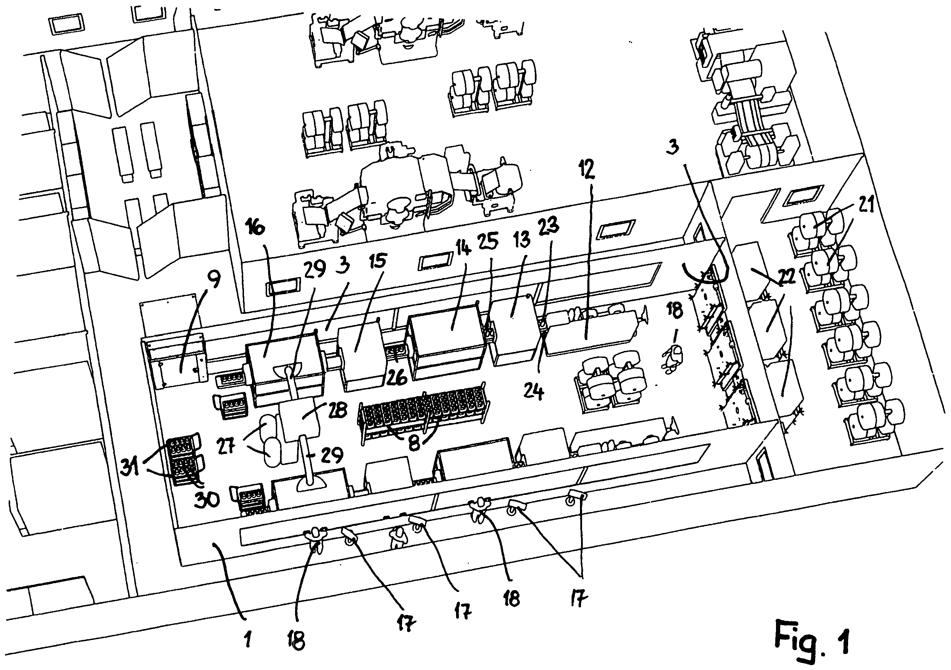

Im Folgenden wird die Herstellung einer Lithium-Ionen-Zelle im Trockenraum als Beispiel näher erläutert. Die Lithium-Ionen-Zellen haben beim Ausführungsbeispiel Zylinderform. Als Ausgangsmaterial werden Folien verwendet, die außerhalb des Trockenraumes in Form von Folienrollen 21 gelagert werden. Bevor sie in den Trockenraum verbracht werden, werden sie in Trocknungsöfen 22 getrocknet, um die an ihnen anhaftende Feuchtigkeit zu entfernen. Die Trocknungsöfen 22 befinden sich außerhalb des Trockenraumes und sind bevorzugt unmittelbar an der Seitenwand 3 des Trocknungsraumes vorgesehen. Die getrockneten Folienrollen 21 werden den Trocknungsöfen 22 über entsprechend abgedichtete Öffnungen in den Trockenraum entnommen. Diese Öffnungen sind so abgedichtet, dass keine Feuchtigkeit über diese Öffnungen von außen in den Trockenraum gelangen kann. In der Prozessmaschine 12 werden die für die Lithium-Ionen-Zellen notwendigen Wickel aus den Folien gewickelt. Diese Folienwickel 23 (Fig. 1) werden mittels einer Transporteinrichtung 24 der Prozessmaschine 13 zugeführt. In ihr werden an den Folienwickeln 23 Kontakte 25 angebracht. Mittels der Transporteinrichtung 24, die vorteilhaft durch alle Prozessmaschinen 12 bis 16 verläuft, werden die mit den Kontakten 25 versehenen Folienwickel 23 der Prozessmaschine 14 zugeführt. Hier werden die Folienwickel 23 in buchsenförmige Gehäuse 26 eingesetzt. Mit der Transporteinrichtung 24 werden die Gehäuse 26 der Prozessmaschine 15 zugeführt, in der ein Leckagetest durchgeführt wird. Ist der Leckagetest erfolgreich, gelangen die gefüllten Gehäuse 26 mittels der Transporteinrichtung 24 in die Prozessmaschine 16. Hier werden die Gehäuse 26 mit Elektrolytflüssigkeit gefüllt. Sie befindet sich in wenigstens einem Tank 27, der an eine Pumpen- bzw. Fördereinrichtung 28 angeschlossen ist. Mit ihr wird die Elektrolytflüssigkeit über Leitungen 29 den Prozessmaschinen 16 zugeführt. In der Prozessmaschine 16 werden zudem die Gehäuse 26 abgedichtet und so die Lithium-Ionen-Zelle fertig gestellt. Die fertigen Produkte 30 werden im Trockenraum auf entsprechenden Lagereinheiten 31 gelagert, die über die Schleuse 9 aus dem Trockenraum herausgebracht werden.

Da im Trockenraum sehr trockene Luft eingesetzt wird, die praktisch kein Wasser mehr enthält, werden Qualitätsprobleme, wie eine vorzeitige Alterung der Lithium-Ionen-Zellen, vermieden, was bei Anwesenheit von Feuchtigkeit sonst der Fall wäre.

Aufgrund der beschriebenen Ausbildung ist die Anwesenheit einer Bedienperson im Trockenraum während der Zellenfertigung nicht erforderlich, wenn ein vollautomatisierter Ablauf stattfindet. Diese Vollautomatisierung kann optimal so vorgesehen sein, dass die Lagereinheiten 31 mit den darauf gelagerten Fertigprodukten 30 automatisch über die Schleuse 9 ausgeschleust werden. Ist dies nicht möglich, dann werden die Lagereinheiten 31 von einer im Trockenraum befindlichen Bedienperson 18 durch die Schleuse 9 aus dem Trockenraum transportiert. Diese einzige Bedienperson 18 im Trockenraum führt zu einer nur unwesentlichen Feuchtelast, so dass die Investitions- und Betriebskosten zur Erzielung der Trockenluft gering sind.

Sofern ein vollautomatischer Betrieb nicht möglich ist, ist der Trockenraum auf die Anwesenheit von ein oder zwei Bedienpersonen 18 ausgelegt. Im Vergleich zu den herkömmlichen Trockenräumen, bei denen sich während der Fertigung üblicherweise sechs oder auch mehr Bedienpersonen pro Fertigungslinie im Trockenraum befinden, ist die Feuchtebelastung äußerst gering, so dass auch die zur Beseitigung der Feuchtigkeit in der Trockenluft erforderlichen Einrichtungen nur geringe Investitions- und Betriebskosten erfordern.

Damit aus der Umgebung keine Feuchtigkeit in den Trockenraum gelangt, steht er unter einem geringen Überdruck.

## Patentansprüche

1. Trockenraum, insbesondere für den Einsatz bei der Lithium-Ionen-Zellfertigung, der von Seitenwänden (1 bis 4) begrenzt ist, der von Trockenluft durchströmt wird und in den wenigstens eine Schleuse (9) führt, **dadurch gekennzeichnet, dass** längs wenigstens einer der Seitenwände (1 bis 4) im Trockenraum mehrere Prozessmaschinen (12 bis 16) angeordnet sind, dass die Bedienung wenigstens einer Prozessmaschine (12 bis 16) von einem Bereich außerhalb des Trockenraumes erfolgt, und dass der Trockenraum von einer Bedienperson über die Schleuse (9) betretbar ist.

2. Trockenraum nach Anspruch 1,
**dadurch gekennzeichnet, dass** die Prozessmaschine (12 bis 16) unmittelbar an einer der Seitenwände (1 bis 4) des Trockenraumes angeordnet ist.

3. Trockenraum nach Anspruch 1 oder 2,
**dadurch gekennzeichnet, dass** die Seitenwand (1 bis 4) in Höhe der Prozessmaschine (12 bis 16) wenigstens ein Fenster (20) aufweist.

4. Trockenraum nach einem der Ansprüche 1 bis 3,
**dadurch gekennzeichnet, dass** die Seitenwände (1 bis 4) und das Fenster (20), insbesondere die Übergänge (Dichtungen) dazwischen, wasserdampfdiffusionsdicht ausgebildet sind.

5. Trockenraum nach einem der Ansprüche 1 bis 4,
**dadurch gekennzeichnet, dass** in der Seitenwand (1 bis 4) wenigstens eine Manipulationseinrichtung (19), vorzugsweise ein Handschuh, für eine manuelle Bedienung der Prozessmaschine (12 bis 16) vorgesehen ist.

6. Trockenraum nach einem der Ansprüche 1 bis 5,
**dadurch gekennzeichnet, dass** die Trockenluft (10) im Kreislauf geführt ist.

7. Trockenraum nach einem der Ansprüche 1 bis 6,
**dadurch gekennzeichnet, dass** der Trockenraum mit wenigstens einer Absaugöffnung (11) für die Trockenluft versehen ist.

8. Trockenraum nach einem der Ansprüche 1 bis 7,
**dadurch gekennzeichnet, dass** die Trockenluft (10) vor ihrem Eintritt in den Trockenraum gefiltert wird.

9. Trockenraum nach einem der Ansprüche 1 bis 8,
**dadurch gekennzeichnet, dass** längs zweier einander gegenüberliegender Seitenwände (1, 3) jeweils mehrere Prozessmaschinen (12 bis 16) angeordnet sind.

10. Trockenraum nach Anspruch 9,
**dadurch gekennzeichnet, dass** zwischen den Prozessmaschinen-Reihen wenigstens ein Lager (8) für Rohmaterialien angeordnet ist.

11. Trockenraum nach Anspruch 10,
**dadurch gekennzeichnet, dass** zwischen den Prozessmaschinen-Reihen bzw. zwischen einander gegenüberliegenden Seitenwänden (1, 3; 2, 4) die Absaugöffnung für die Trockenluft (10) angeordnet ist.

12. Trockenraum nach einem der Ansprüche 1 bis 11,
**dadurch gekennzeichnet, dass** die Trockenluftzufuhr geregelt wird.

13. Trockenraum nach einem der Ansprüche 1 bis 12,
**dadurch gekennzeichnet, dass** der vorzugsweise antistatische Boden (5) und die Decke (6) des Trockenraumes und die Übergänge dazwischen und zu den Seitenwänden (1 bis 4) wasserdampfdiffusionsdicht ausgebildet sind.

14. Trockenraum nach einem der Ansprüche 1 bis 13,
**dadurch gekennzeichnet, dass** der Trockenraum unter einem geringen Überdruck steht.

## Claims

1. Dry room, in particular for use in the production of lithium ion cells, which is delimited by side walls (1 to 4), through which dry air flows and which leads into at least one airlock (9), **characterised in that** along at least one of the side walls (1 to 4) in the dry room several processing machine are arranged, **in that** at least one of the processing machines (12 to 16) is operated from an area outside the dry room and **in that** the dry room can be accessed by an operator via the airlock (9).

2. Dry room according to claim 1
**characterised in that** the processing machine (12 to 16) is arranged directly on one of the side walls (1 to 4) of the dry room.

3. Dry room according to claim 1 or 2
**characterised in that** the side wall (1 to 4) has at least one window (20) at the location of the processing machine (12 to 16).

4. Dry room according to any one of claims 1 to 3
**characterised in that** the side walls (1 to 4) and the window (20), in particular the transitions (seals) between them, are impermeable to water vapour diffusion.

5. Dry room according to any one of claims 1 to 4
**characterised in that** in the side wall (1 to 4) at least one manipulation device (19), preferably a glove, is provided for manual operation of the processing machine (12 to 16).

6. Dry room according to any one of claims 1 to 5
**characterised in that** the dry air (10) is in a circulation.

7. Dry room according to any one of claims 1 to 6
**characterised in that** the dry room is provided with at least one suction opening (11) for the dry air.

8. Dry room according to any one of claims 1 to 7
**characterised in that** the dry air (10) filtered before it enters the dry room.

9. Dry room according to any one of claims 1 to 8
**characterised in that** several processing machines (12 to 16) respectively are arranged along two side walls (1, 3) that are opposite to each other.

10. Dry room according to claim 9
**characterised in that** at least one store (8) for raw materials is arranged between the rows of processing machines.

11. Dry room according to claim 10
characterised that the suction opening for the dry air (10) is arranged between the rows of processing machines or between side walls (1, 3; 2, 4) that are opposite each other.

12. Dry room according to any one of claims 1 to 11
**characterised in that** the dry air supply is controlled.

13. Dry room according to any one of claims 1 to 12
**characterised in that** the preferably antistatic floor (5) and the ceiling (6) of the dry room and the transitions between them and to the side walls (1 to 4) are impermeable to water vapour diffusion.

14. Dry room according to any one of claims 1 to 13
**characterised in that** the dry room is kept at a slight overpressure.

## Revendications

1. Chambre sèche, en particulier pour l'utilisation lors de la fabrication de batteries au lithium-ion, qui est limitée par des parois latérales (1 à 4), qui est traversée par de l'air sec et conduit dans au moins un sas (9), **caractérisée en ce que** le long d'au moins une des parois latérales (1 à 4) dans la chambre sèche sont disposées plusieurs machines de traitement (12 à 16), **en ce que** la manipulation d'au moins une machine de traitement (12 à 16) à lieu depuis une zone en dehors de la chambre sèche et **en ce qu'**un opérateur peut avoir accès à la chambre sèche par le sas (9).

2. Chambre sèche selon la revendication 1, **caractérisée en ce que** la machine de traitement (12 à 16) est disposée directement sur une des parois latérales (1 à 4) de la chambre sèche.

3. Chambre sèche selon des revendications 1 ou 2, **caractérisée en ce que** la paroi latérale (1 à 4) comporte au moins une fenêtre (20) à la hauteur de la machine de traitement (12 à 16).

4. Chambre sèche selon l'une quelconque des revendication 1 à 3, **caractérisée en ce que** les parois latérales (1 à 4) et la fenêtre (20) en particulier les passages (joints d'étanchéité) entre elles, sont constituées étanches à la diffusion de vapeur d'eau.

5. Chambre sèche selon l'une quelconque des revendications 1 à 4, **caractérisée en ce que** dans la paroi latérale (1 à 4) au moins un dispositif de manipulation (19) est prévu, de préférence un gant, pour une manipulation manuelle de la machine de traitement (12 à 16).

6. Chambre sèche selon l'une quelconque des revendications 1 à 5, **caractérisée en ce que** l'air sec (10) est passé en circuit.

7. Chambre sèche selon l'une quelconque des revendications 1 à 6, **caractérisée en ce que** la chambre sèche est dotée d'au moins une ouverture d'aspiration (11) pour l'air sec.

8. Chambre sèche selon l'une quelconque des revendications 1 à 7, **caractérisée en ce que** l'air sec (10) est filtré avant son entrée dans la chambre sèche.

9. Chambre sèche selon l'une quelconque des revendications 1 à 8, **caractérisée en ce que** plusieurs des machines de traitement (12 à 16) sont respectivement disposées le long de deux parois latérales (1,3) opposées l'une à l'autre.

10. Chambre sèche selon la revendication 9, **caractérisée en ce qu'**au moins un magasin (8) pour des matières premières est disposé entre les rangées de machines de traitement.

11. Chambre sèche selon la revendication 10, **caractérisée en ce que** l'ouverture d'aspiration pour l'air sec (10) est disposée entre les rangées de machines de traitement ou entre les parois latérales (1,3 ;2,4) opposées l'un à l'autre.

12. Chambre sèche selon l'une quelconque des revendications 1 à 11, **caractérisée en ce que** l'alimentation en air sec est régulée.

13. Chambre sèche selon l'une quelconque des revendications 1 à 12, **caractérisée en ce que** le sol (5) de préférence antistatiques et le plafond (6) de la chambre sèche et les passages entre eux et vers les parois latérales (1 à 4) sont constitués étanches à la diffusion de vapeur d'eau.

14. Chambre sèche selon l'une quelconque des revendications 1 à 13, **caractérisée en ce que** la chambre sèche se trouve sous une faible surpression.
